# EUROPÄISCHE PATENTSCHRIFT

(11) **EP 2 173 461 B1**
(45) Veröffentlichungstag und Bekanntmachung des Hinweises auf die Patenterteilung: **15.06.2011**
(21) Anmeldenummer: 07787963.3
(22) Anmeldetag: 27.07.2007
(51) Int. Cl.: B01D 46/52, F02M 35/024

(54) **LUFTFILTER, INSBESONDERE FÜR VERBRENNUNGSMOTOREN IN KRAFTFAHRZEUGEN**
AIR FILTER, ESPECIALLY FOR INTERNAL COMBUSTION ENGINES IN MOTOR VEHICLE
FILTRE À AIR CONÇU EN PARTICULIER POUR DES MOTEURS À COMBUSTION INTERNE DE VÉHICULES AUTOMOBILES

(43) Veröffentlichungstag der Anmeldung: 14.04.2010
(73) Patentinhaber: Mann + Hummel GmbH, 71638 Ludwigsburg (DE)
(72) Erfinder: EISENGRÄBER-PABST, Jobst, 71726 Benningen a.N. (DE); HUBER, Matthäus, 94419 Reisbach (DE); MOSER, Nikolaus, 71254 Ditzingen (DE); ROHRMEIER, Josef, 84082 Laberweinting (DE); WALZ, Stefan, 71691 Freiberg (DE)
(74) Vertreter: Voth, Gerhard
(86) Internationale Anmeldenummer: PCT/EP2007/057746
(87) Internationale Veröffentlichungsnummer: WO 2009/015684

(56) Entgegenhaltungen:
- EP-A- 0 504 038
- DE-C- 963 829
- DE-U1- 8 521 419
- FR-A- 2 267 818
- GB-A- 764 702
- GB-A- 2 327 624
- US-A- 3 058 594
- US-A- 3 490 211
- US-A- 3 726 408

## Beschreibung

### Technisches Gebiet

Die Erfindung betrifft einen Luftfilter, insbesondere für Verbrennungsmotoren in Kraftfahrzeugen der im Oberbegriff des Anspruchs 1 angegebenen Gattung sowie ein Verfahren zur Herstellung eines Luftfilters der im Oberbegriff des Anspruchs 11 angegebenen Gattung.

### Stand der Technik

Die Ansaugluft von Verbrennungsmotoren wird üblicherweise vor dem Eintritt in den Motor durch einen Luftfilter geleitet, in dem die Schmutzpartikel aus dem von der Umgebung des Fahrzeugs angesaugten Luftstrom abgeschieden werden. Aus der DE 102 00 673 A1 ist ein Luftfilter bekannt, bei dem in einem Luftfiltergehäuse eine Filtermatte einen Reinluftteil von einem Rohluftteil trennt.

Aus der DE 963 829 C ist ein Filterkörper, bestehend aus einer in zwei zueinander senkrechten Richtungen gefalteten Filterstoffbahn bekannt. Die DE 102 31 696 A1 offenbart einen Filtereinsatz zur Anordnung in einem Filtergehäuse. Der Filtereinsatz besteht aus einem Faltenbalg, bei dem ein Filtermaterial wie Papier oder Filtervlies zickzackförmig gefaltet ist, wodurch eine Vielzahl benachbarter Taschen gebildet werden. Der bekannte Filtereinsatz weist somit eine ziehharmonikaähnlich gefaltete Struktur auf, bei der die Scheitel der Taschen zu gegenüberliegenden Seiten des Faltenbalgs in parallelen Ebenen liegen. Der Faltenbalg weist im Wesentlichen die Form eines flachen Quaders auf, wobei die Falze auf der einen Seite des Faltenbalgs eine Hauptfilterfläche für die Rohluftseite des Luftfilters aufspannen und die in der Parallelebene liegenden Falze der gegenüberliegenden Taschenscheitel die Filterfläche für die Reinluftseite begrenzen. Bei dem bekannten Filtereinsatz ist an dem Faltenbalg im Bereich der Stirnkanten, das heißt den Enden des Balgmaterials jeweils eine Endkappe aus Kunststoff flächendeckend verklebt oder verschweißt. Die Endkappe soll den Faltenbalg versteifen und in der definierten Kastenform halten, um den Filtereinsatz abgedichtet und stabil in seiner Einbaulage im Luftfiltergehäuse zu halten.

Bei modernen Verbrennungsmotoren für den Einsatz in Kraftfahrzeugen steht jedoch im Ansaugbereich nur ein begrenzter Bauraum zur Anordnung des Luftfilters zwischen den angrenzenden Motoraggregaten zur Verfügung. Der bekannte Filtereinsatz mit Quaderform und dem entsprechenden Raumbedarf kann daher häufig nicht in den zur Verfügung stehenden Raum insbesondere mit unregelmäßiger Konfiguration am Verbrennungsmotor eingebaut werden.

Häufig ist eine Formgebung des Luftfiltergehäuses wünschenswert, welche dem zur Verfügung stehenden Bauraum und der Motorgeometrie Rechnung trägt_ Die DE 198 16 431 A1 schlägt eine Ausbildung des Filtereinsatzes vor, bei der der Filtereinsatz eine der Einbauform entsprechende Kontur aufweist. Die Kontur wird durch unterschiedliche Höhen der Taschen entsprechend dem Einbaufall erzeugt, wobei die durchgehende Zickzackfaltung beibehalten ist. Mit dem bekannten Filterelement kann zwar eine teilweise angepasste Form des Filtereinsatzes erzeugt werden, jedoch ist die Herstellung eines solchen Filtereinsatzes mit völlig unterschiedlichen Taschenhöhen aufwendig und teuer.

### Offenbarung der Erfindung

Der vorliegenden Erfindung liegt die Aufgabe zugrunde, einen Luftfilter der gattungsgemäßen Art zu schaffen, bei dem mit einfachen baulichen Mitteln eine beliebige Anpassung der Form des Filtereinsatzes an den vorgegebenen Bauraum in der Einbaulage möglich ist.

Außerdem ist es Aufgabe der Erfindung, ein Verfahren zur Herstellung eines Luftfilters der gattungsgemäßen Art zu schaffen, durch das auf einfache Weise beliebige Formen des Filtereinsatzes erzeugbar sind.

Diese Aufgabe wird einerseits einen Luftfilter mit den Merkmalen des Anspruchs 1 gelöst.

Die Erfindung umfasst einen Faltenbalg mit einer ersten Faltung und dadurch gegebene erste Falze und einer quer zur Längsrichtung der ersten Falze erfolgenden zweiten Faltung und dadurch gegebene zweite Falze, wobei das gefaltete Filtermaterial auf ein gewünschtes Maß abgelängt und in eine der gewünschten Form entsprechende Konfiguration gebracht wird. Mittels der Dichtung, die an dem Faltenbalg angebracht ist, wird diese Konfiguration beibehalten. Die Vielfalt der möglichen Faltenbalgkonfigurationen ist ein besonders großer Vorteil gegenüber den bisher bekannten Filtereinsätzen, denn mit der Erfindung lassen sich beliebige Faltenbalgkonfigurationen mit Dichtungen in zwei Ebenen (2D-Elemente) oder in drei Ebenen (3D-Elemente) verwirklichen.

Die Dichtungspositionierung kann entlang der Stirn- und Längsseiten in jeder beliebigen Höhe angebracht werden, was zur universellen Anpassung an die jeweilige Gehäusekonfiguration beiträgt. Bei Dichtungen, deren Material durch Spritzen, Gießen oder Schäumen angebracht wird, ist es vorteilhaft, eine zusätzliche formschlüssige Verbindung zu schaffen, die insbesondere die Positionierung in der Höhe festlegt bzw. sichert. Hierzu weisen erfindungsgemäß die an den Längsseiten befindlichen äußeren Falten auf der Höhe der Dichtung nach außen ausgestellte Abschnitte auf, die in das Dichtungsmaterial ragen.

Unter Berücksichtigung der jeweiligen Einbaubedingungen und Gestaltung des Faltenbalgs kann es zweckmäßig sein, dass die Dichtung an den Stirnseiten und an den Längsseiten des Faltenbalgs aus unterschiedlichem Material besteht. Die Abdichtung der durch Ablängung entstandenen Stirnkanten kann beispielsweise durch eine eingefasste Schmelzkleberraupe, Sprühverklebung, PUR-Schaumapplikation oder Seitenbandverklebung erfolgen. Als besonders zweckmäßig wird es jedoch angesehen, dass die Dichtung an allen Seiten des Faltenbalgs aus gleichem Material besteht. Dadurch wird die Herstellung vereinfacht. Als Dichtungsmaterial kann ein Dichtband vorgesehen sein. Vorteilhaft ist jedoch, dass die Dichtung aus einem Silikon oder einem PUR-Schaum besteht.

Gemäß einer vorteilhaften Ausgestaltung der Erfindung besteht die Dichtung aus einem thixothropierten PUR-Schaum. Dieses Dichtungsmaterial bietet mehrere Vorteile, insbesondere eine vereinfachte Herstellung der Dichtung bei Auslenkung in drei Dimensionen. Hierzu kann eine offene Herstellungsform, in welche der Faltenbalg eingelegt und der PUR-Schaum appliziert wird, benutzt werden. Auch breite Dichtungsränder sind auf einfache Weise realisierbar. Ebenso ist es möglich, unterschiedliche Shorehärten zu benutzen, wobei in zwei Arbeitsschritten eine harte und dann eine weiche PUR-Komponente appliziert werden. Die harte Komponente dient zur Versteifung des Elements, wohingegen die weiche Komponente zur Abdichtung benutzt wird. Besonders zweckmäßig ist es, die Dichtung als Dichtrahmen mit umlaufenden Dichtflächen auszubilden. Zur Bildung eines Dichtrahmens wird vorzugsweise ein Dichtungsmaterial im flüssigen oder pastösen Zustand auf Höhe der gewünschten Dichtungsposition aufgetragen und anschließend ausgehärtet.

### Kurze Beschreibung der Zeichnungen

Die Erfindung ist nachstehend anhand von in der Zeichnung enthaltenen Ausführungsbeispielen näher erläutert. In der Zeichnung zeigt:

Fig. 1 einen Ausschnitt eines Faltenbalgs in Draufsicht,
Fig. 2 einen Schnitt entlang der Linie II-II in Fig. 1,
Fig. 3 eine Draufsicht auf einen durch eine erste und eine zweite Faltung hergestellten Faltenbalg,
Fig. 4 einen Schnitt entlang der Linie IV-IV in Fig. 3,
Fig. 5 eine schematische Darstellung eines Faltenbalgs mit einer umlaufenden Dichtung,
Fig. 6 eine vergrößerte Darstellung der Einzelheit VI in Fig. 5,
Fig. 7 eine perspektivische Darstellung eines in drei Dimensionen konfigurierten Filtereinsatzes,
Fig. 8 verschiedene geometrische Konfigurationen, die durch einen Faltenblag gemäß Fig. 3 realisierbar sind, Fig. 9a-9f verschiedene Ausführungen von aus PUR-Schaum hergestellten Dichtungen,
Fig. 10 eine schematische Darstellung eines unregelmäßig konfigurierten Filtereinsatzes,
Fig. 11 und 12 zwei verschiedene Ansichten eines Filtereinsatzes mit einem in Ebenen verlaufenden Dichtungsprofil,
Fig. 13 verschiedene perspektivische Darstellungen einer Gießform für Dichtungen aus einem thixothropierten PUR-Schaum,
Fig. 14 die Herstellung der aus einem thixothropierten PUR-Schaum bestehenden Dichtung
Fig. 15 den fertigen Filtereinsatz in der Gießform gemäß Fig. 13.

### Ausführungsform(en) der Erfindung

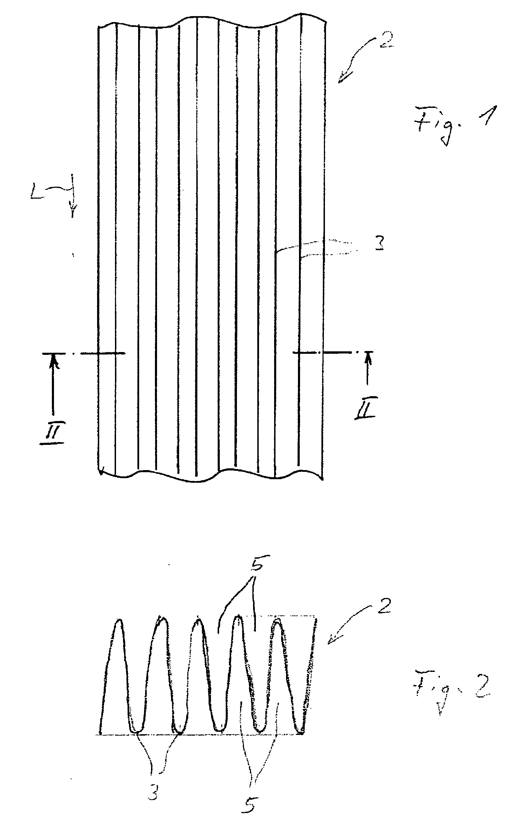

In Fig. 1 ist ein Ausschnitt eines Faltenbalgs 2 in der Draufsicht gezeigt. Dieser Faltenbalg 2 wird als Endlosmaterial oder in großen Längen hergestellt und später durch einen Schnitt quer zur Längsrichtung L auf das gewünschte Maß gebracht. In diesem Stadium der Herstellung ist das Filtermaterial - beispielsweise ein Papier oder Vlies - zickzackförmig gefaltet, so dass in Längsrichtung L verlaufende erste Falze 3 gebildet sind. Zwischen den Falzen 3 befinden sich ebenfalls in Längsrichtung L verlaufende Taschen 5.

Die Fig. 2 zeigt einen Schnitt entlang der Linie II-II in Fig. 1. Daraus ist ersichtlich, dass das Filtermaterial zickzackförmig gefaltet ist und so den Faltenbalg 2 bildet, wobei dieser eine Vielzahl von benachbarten Taschen 5 bildet und an den jeweiligen Taschenscheiteln erste Falze 3 gebildet sind. Wie bereits in Fig. 1 beschrieben, verlaufen die ersten Falze 3 und Taschen 5 in Längsrichtung L des Faltenbalgs 2.

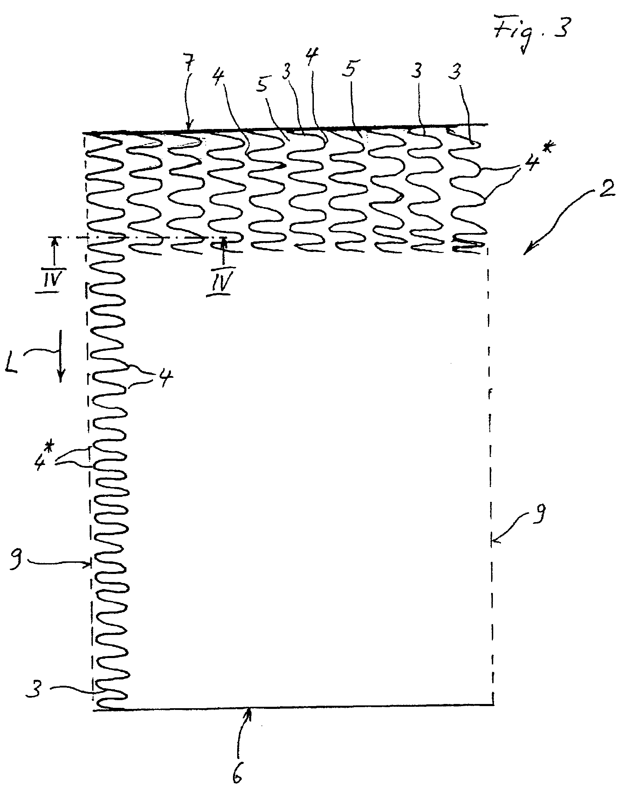

Die Fig. 3 zeigt eine Draufsicht auf einen Faltenbalg 2 in einem weiteren Herstellungsstadium, wobei das Filtermaterial eine zusätzliche Faltung aufweist, die quer zur Längsrichtung L eingebracht ist. Daraus entsteht ein zickzackförmiger Verlauf der ersten Falze 3, so dass zweite Falze 4 gebildet werden, die sich im Wesentlichen orthogonal zu den ersten Falzen 3 erstrecken. Zwischen den nunmehr zickzackförmig verlaufenden ersten Falzen 3 befinden sich die Taschen 5. Der in Fig. 3 dargestellte Faltenbalg 2 ist durch quer zur Längsrichtung L erfolgende Schnitte auf das gewünschte Maß abgelängt, so dass sich eine vordere Stirnseite 6 und eine hintere Stirnseite 7 ergeben. Zwischen vorderer Stirnseite 6 und hinterer Stirnseite 7 erstrecken sich an der Seite des Faltenbalgs 2 Längsseiten 9. Die Längsseiten 9 werden im Wesentlichen durch die an der Außenseite liegenden zweiten Falze 4* definiert.

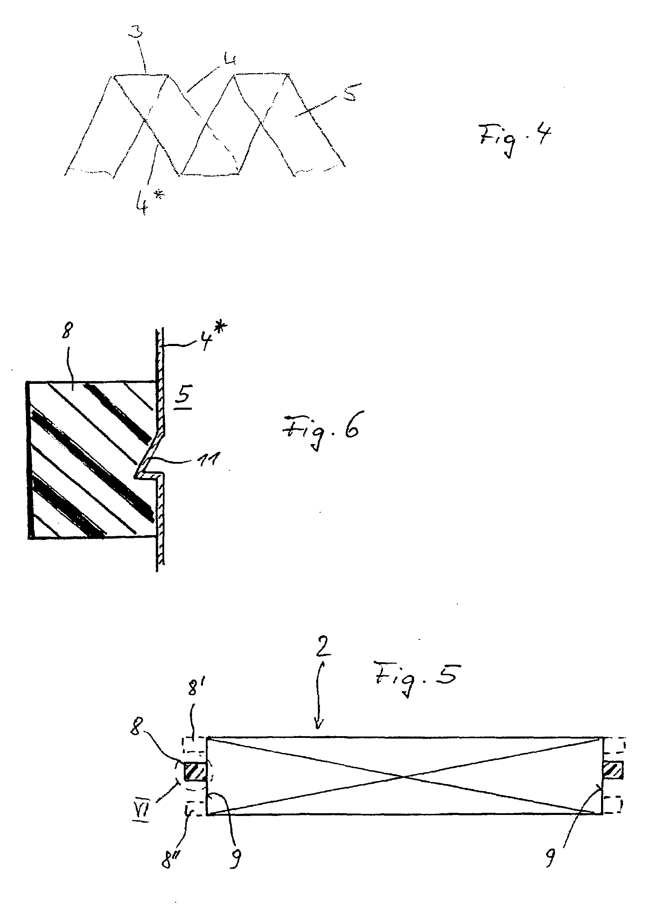

Die Fig. 4 zeigt einen Schnitt entlang der Linie IV-IV in Fig. 3. Daraus ergibt sich, dass sich an der oberen Seite und unteren Seite des Faltenbalgs 2 die ersten Falze 3 befinden, die wie in Fig. 3 gezeigt, zickzackförmig verlaufen. Dieser Verlauf ergibt sich durch die quer zu der ersten Faltung eingebrachte weitere Faltung, die dann die im Wesentlichen orthogonal zu den ersten Falzen 3 verlaufenden zweiten Falze 4, 4* erzeugt. Somit werden die Taschen 5 von einem ersten Falz 3 und zwei im Wesentlichen orthogonal dazu verlaufende zweite Falze 4 begrenzt.

In Fig. 5 ist eine schematische Darstellung eines Faltenbalgs 2 mit einer umlaufenden Dichtung 8 gezeigt. Die Dichtung 8 besteht beispielsweise aus einem Silikon oder einem PUR-Schaum. Da die Längsseiten 9 des Faltenbalgs 2 ohne Absatz ausgebildet sind, kann die Dichtung 8 auf einer beliebigen Höhe der Längsseiten 9 angebracht werden, wie dies beispielsweise durch die gestrichelten Darstellungen für eine Dichtung 8' bzw. 8" gezeigt ist.

Die Fig. 6 zeigt eine vergrößerte Darstellung der Einzelheit VI in Fig. 5. Das Beispiel zeigt eine aus einem aushärtbaren Kunststoffmaterial bestehende Dichtung 8, wobei zur Sicherung der Position der Dichtung 8 bezogen auf die Höhe des Faltenbalgs 2 an den äußeren Falzen 4* erfindungsgemäß ein ausgestellter Abschnitt 11 vorgesehen ist, durch den sich ein Formschluss zwischen dem Filtermaterial und der Dichtung 8 bezogen auf die Höhe des Faltenbalgs ergibt.

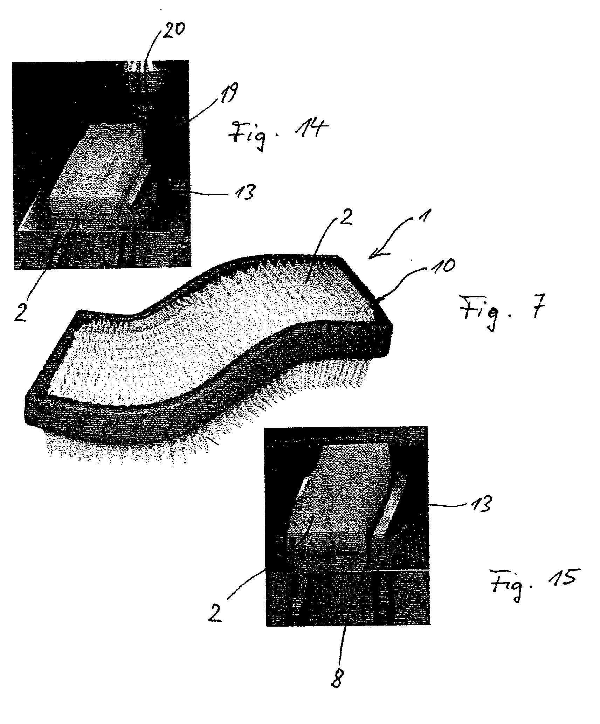

Die Fig. 7 zeigt eine perspektivische Darstellung eines in drei Dimensionen konfigurierten Filtereinsatzes 1. Dieser Filtereinsatz 1 besteht aus dem Faltenbalg 2 und einem diesen auf dem gesamten Umfang umgebenden Dichtrahmen 10. Der Dichtrahmen 10 besteht in diesem Fall vorzugsweise aus einem thixothropierten PUR-Schaum. Es könnte jedoch durchaus ein anderes geeignetes Material vorgesehen werden. Wie sich aus Fig. 7 weiterhin ergibt, bietet die zweifache Faltung des Filtermaterials die Möglichkeit, den Faltenbalg 2 in beliebige Konfiguration in drei Ebenen zu bringen, wobei anschließend durch das Anbringen des Dichtrahmens 10 diese Konfiguration aufrechterhalten wird.

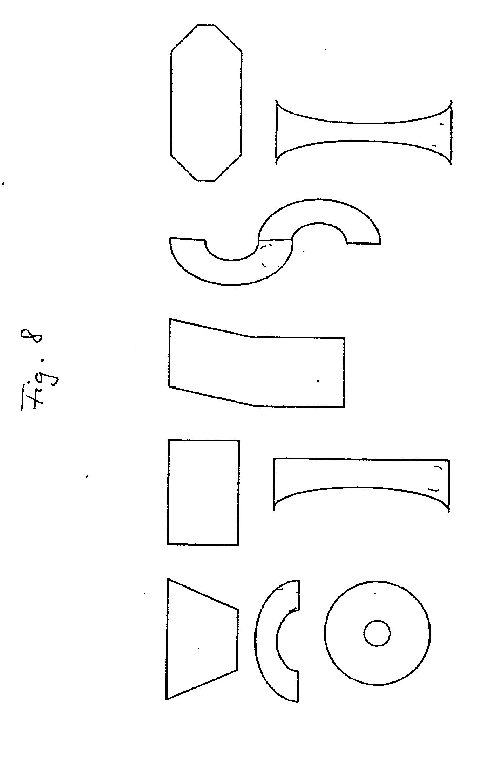

Aufgrund der zweifachen Faltung, wobei die zweite Faltung im Wesentlichen quer zur ersten Faltung erfolgt, besteht die Möglichkeit, den Faltenbalg in unterschiedlichen Formen zu konfigurieren. Für Konfiguration in zwei Ebenen, das heißt, Länge und Breite des Faltenbalgs, ergeben sich beispielsweise die Formen, die in Fig. 8 dargestellt sind. Dabei handelt es sich um ein Trapez, ein Rechteck, ein abgeknicktes Rechteck, eine S-Form, eine im Wesentlichen ovale Form, einen Bogen, einen Kreisring, einen einseitig taillierten Balg und einen beidseitig taillierten Balg.

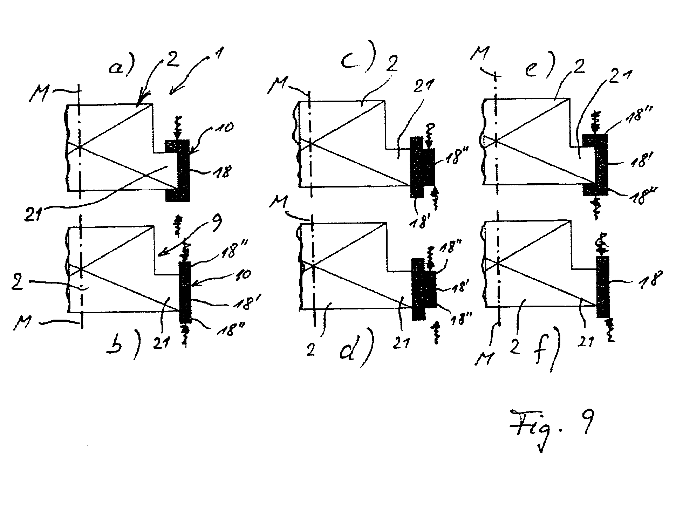

In Fig. 9a bis 9f sind verschiedene Ausführungen von Dichtungen 18 dargestellt, die beispielsweise aus PUR-Schaum bestehen und als Dichtrahmen 10 den gesamten Faltenbalg umgeben können. Die schematische Darstellung der Ausführungen ist vereinfacht, so dass der Schnitt jeweils nur auf einer Seite eines symmetrisch zu einer Mittelachse M ausgebildeten Filtereinsatzes 1 dargestellt ist. Dabei zeigt Fig. 9a den Filtereinsatz 1, bei dem der Faltenbalg 2 an seiner Längsseite 9 einen Seitenrand 21 von geringerer Faltungshöhe aufweist. An diesem Seitenrand 21 ist die Dichtung 18 angeordnet, die im Wesentlichen einen U-förmigen Querschnitt aufweist und somit den Seitenrand 21 an drei Seiten umgibt. Die Fig. 9b zeigt einen Filtereinsatz 1, bei dem der Faltenbalg 2 die gleiche Form aufweist wie in Fig. 9a. Allerdings umfasst die Dichtung einen Dichtungsabschnitt 18' aus einem härteren PUR-Schaum, an den sich oben und unten jeweils ein Dichtungsabschnitt 18" aus einem weicheren PUR-Schaum anschließt. Diese Materialien unterschiedlicher Härte haben den Vorteil, dass durch den Abschnitt 18' die Formstabilität gegeben ist, wohingegen die Abschnitte 18" für eine gute Abdichtung sorgen.

Eine Ausführungsvariante zu der Dichtung aus zwei Komponenten PUR-Schaum ist in den Fig. 9c, 9d und 9e dargestellt. Die Fig. 9f wiederum zeigt eine Ausführungsvariante zu Fig. 9a und 9b und somit einer Dichtung 18, die ausschließlich aus einem härteren PUR-Schaum besteht.

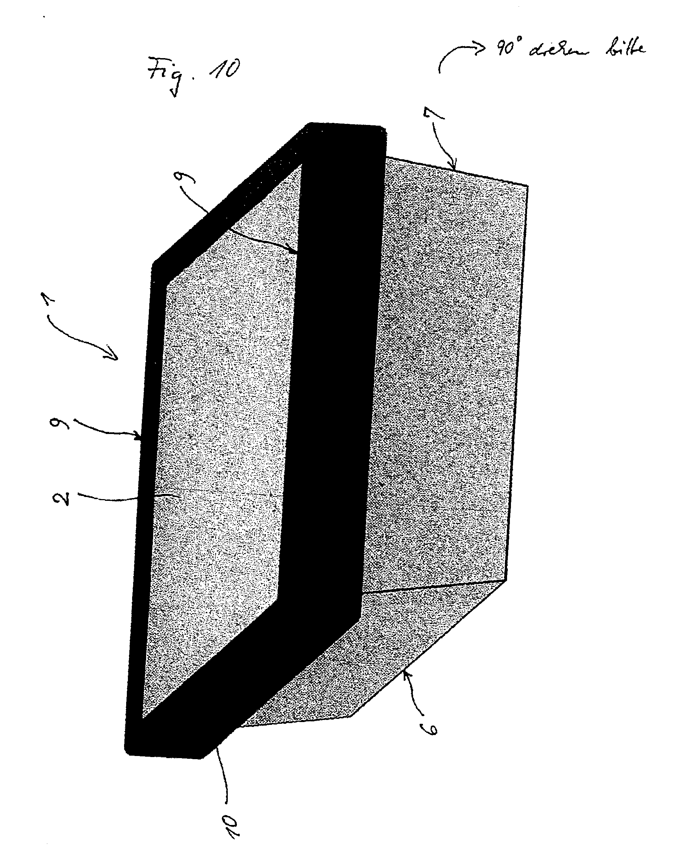

In Fig. 10 ist eine schematische Darstellung eines unregelmäßig konfigurierten Filtereinsatzes gezeigt. Der Filtereinsatz besteht aus dem Faltenbalg 2 und dem Dichtrahmen 10, der den Faltenbalg 2 vollständig umschließt. Es ist aus Fig. 10 ersichtlich, dass eine der Längsseiten 9 wesentlich kürzer ist als die andere Längsseite 9 und dass die vordere Stirnseite 6 gegenüber der hinteren Stirnseite 7 eine Neigung aufweist. Diese unterschiedlichen Maße in verschiedenen Ebene sind aufgrund der in den Fig. 3 und 4 gezeigten Struktur des Faltenbalgs 2 möglich.

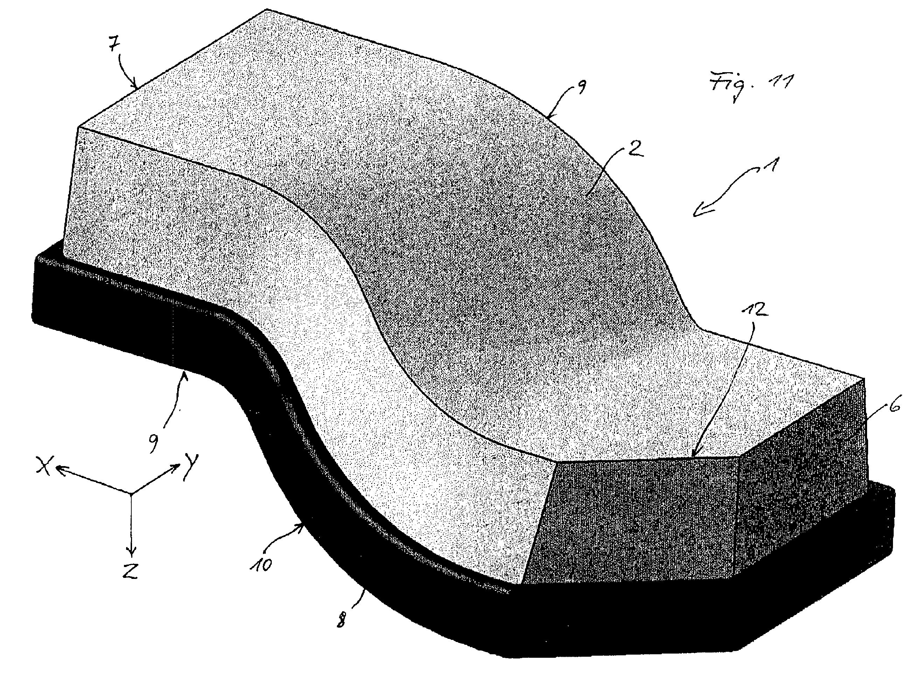

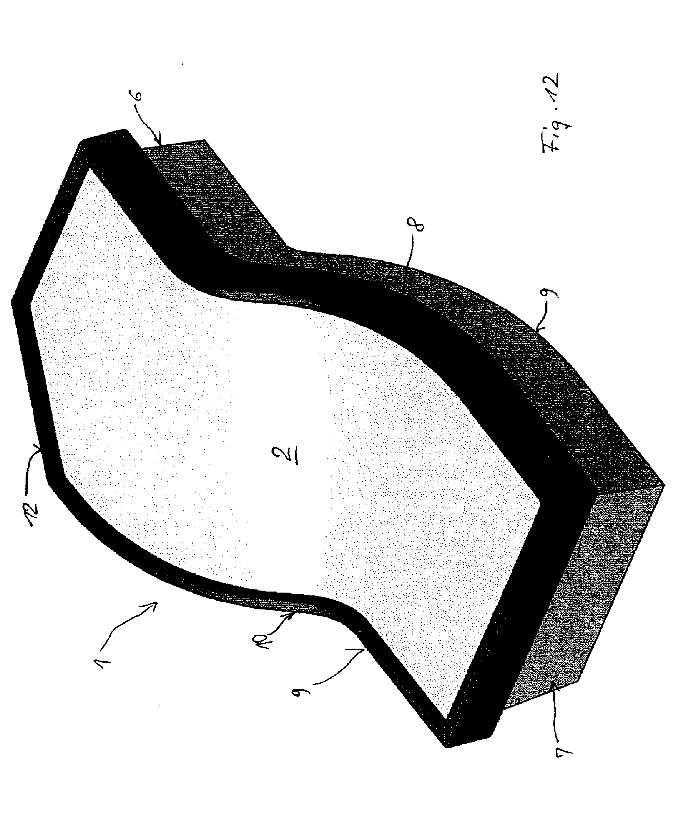

In den Fig. 11 und 12 ist in zwei verschiedenen Ansichten ein Filtereinsatz 1 mit einem in drei Ebenen verlaufenden Dichtungsprofil 10 gezeigt. So erstreckt sich die Längsseite 9 des Filtereinsatzes 1 in der Ebene X, wohingegen die vordere Stirnseite 6 im Wesentlichen der Ebene Y entspricht. In der Höhe erstreckt sich der Faltenbalg 2 in der Richtung Z. Es ist ersichtlich, dass der der hinteren Stirnseite 7 benachbarte Bereich des Filtereinsatzes 1 auf einer bezogen auf die Z-Richtung höheren Ebene angeordnet ist als der der vorderen Stirnseite 6 benachbarte Bereich. Außerdem wird deutlich, dass zwischen der vorderen Stirnseite 6 und der in Fig. 11 vorderen Längsseite 9 eine Abschnittskante 12 vorhanden ist, so dass an dieser ²Stelle bereits eine weitere Unregelmäßigkeit in der Form des Filtereinsatzes 1 verwirklicht ist. Durch solche Abschnittskanten 12 kann beispielsweise dem zur Verfügung gestellten Bauraum für den Filtereinsatz 1 Rechnung getragen werden. Während Fig. 11 den Filtereinsatz 1 in einer Lage zeigt, bei der der Dichtrahmen 10 am unteren Rand der Höhe des Faltenbalgs 2 angeordnet ist, zeigt die Fig. 12 genau diesen Filtereinsatz 1 von der anderen Seite. Im Übrigen stimmen die Bezugszeichen für gleiche Teile in den Fig. 11 und 12 überein.

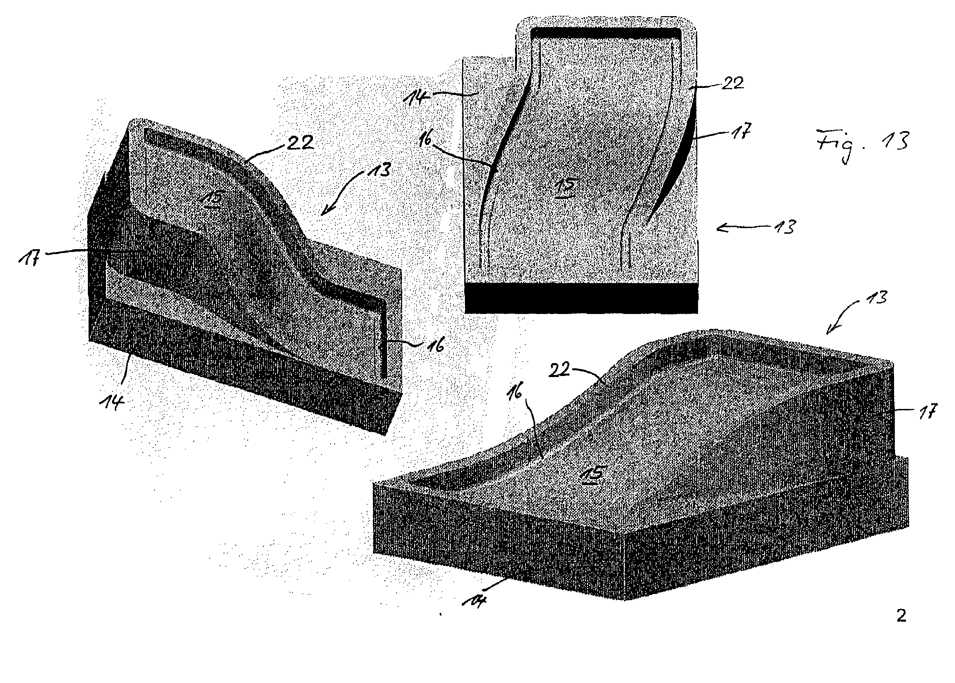

Die Fig. 13 zeigt verschiedene Ansichten von perspektivischen Darstellungen einer Gießform für Dichtungen aus einem thixothropierten PUR-Schaum. Diese Form 13 umfasst einen Sockel 14 und einen sich daraus erhebenden erhöhten Teil 17, wobei ein Rand 22 eine Aufnahme 15 für einen Faltenbalg umgibt. Ein Bereich der Aufnahme 15 befindet sich auf einem unteren Niveau und somit innerhalb des Sockels 14, wohingegen ein anderer Bereich der Aufnahme 15 in dem erhöhten Teil 17 liegt. Der sich aus dem Sockel 14 erhöhende Bereich der Aufnahme 15 ist von einem Rand 22 umgeben. Entlang des Randes 22 und auch im Sockel 14 erstreckt sich entlang der Aufnahme 15 für den Faltenbalg eine Nut 16, die zur Aufnahme von Dichtungsmaterial dient, so dass der Faltenbalg mit einer Dichtung bzw. mit einem Dichtrahmen versehen werden kann, um einen Filtereinsatz zu bilden.

Eine Form, wie sie in der Fig. 13 dargestellt ist, eignet sich in solchen Fällen, bei denen das Dichtungsmaterial nur bedingt fließfähig ist bzw. nach dem Einbringen äußerst schnell erstarrt. Für ein solches Herstellungsverfahren kommt insbesondere ein thixothropierter PUR-Schaum in Betracht. Auf diese Weise wird vermieden, dass das Dichtungsmaterial in einen Bereich auf einer niedrigeren Ebene abfließt, sondern ein Dichtungsrahmen erzeugt werden kann, der mindestens annähernd dem Verlauf des konfigurierten Filterbalgs entspricht.

In Fig. 14 ist ein in der in Fig. 13 beschriebenen Form 13 aufgenommener Faltenbalg 2 gezeigt. Zwischen dem Rand des Faltenbalgs 2 und der Gießform 13 bzw. deren Rand 22 ist ein Abstand vorgesehen, in den mittels einer Zuführeinrichtung 20 und an deren vorderen Ende angeordneter Düse 19 das entsprechende Dichtungsmaterial eingebracht wird. Dabei fährt die Zuführeinrichtung 20 entlang der Längs- und Stirnseiten des Faltenbalgs und verfüllt auf diese Weise die in Fig. 13 gezeigte Nut 16 entlang den Rändern des Faltenbalgs 2. Das eingegossene gespritzte bzw. geschäumte Material verbindet sich dabei mit dem Filtermaterial des Faltenbalgs 2, wie dies beispielsweise auch zu Fig. 6 beschrieben ist. Die Fig. 15 zeigt den fertigen Filtereinsatz in der Gießform gemäß Fig. 13. Die Bezugszeichen stimmen mit denen zu Fig. 13 und 14 überein.

## Patentansprüche

1. Luftfilter, für Verbrennungsmotoren in Kraftfahrzeugen und Kraftfahrzeuginnenräumen, bei dem ein Filtereinsatz (1) einen Faltenbalg (2) aus zickzackförmig gefaltetem Material wie Papier, Vlies oder dergleichen umfasst, und der Faltenbalg (2) eine Vielzahl benachbarter Taschen (5) bildet, wobei zwischen den Taschen (5) des gefalteten Filtermaterials erste Falze (3) am Scheitel der Taschen (5) gebildet sind, und mit einer Dichtung (8, 18) am Faltenbalg (2), **dadurch gekennzeichnet, dass** das gefaltete Filtermaterial eine quer zu einer Längsrichtung (L) des Faltenbalgs (2) bzw. der Taschen (5) verlaufende zusätzliche Faltung aufweist und im Wesentlichen quer zu dieser Längsrichtung (L) verlaufende zweite Falze (4) gebildet sind und wobei eine quer zur Längsrichtung der Taschen (5) verlaufende vordere oder hintere Stirnseite (6, 7) des Faltenbalgs (2) durch einen Schnitt zur Ablängung des Faltenbalgs (2) gebildet sind, wobei die an den Längsseiten (9) befindlichen äußeren Falten (4*) auf der Höhe der Dichtung (8) nach außen ausgestellte Abschnitte (11) aufweisen, die in das Dichtungsmaterial der Dichtung (8) ragen.

2. Luftfilter nach Anspruch 1, **dadurch gekennzeichnet, dass** die Dichtung (8, 18) an den Stirnseiten (6, 7) und an Längsseiten (9) des Faltenbalgs (2) aus unterschiedlichem Material besteht.

3. Luftfilter nach Anspruch 1, **dadurch gekennzeichnet, dass** die Dichtung (8, 18) an allen Seiten (6, 7, 9) des Faltenbalgs (2) aus gleichem Material besteht.

4. Luftfilter nach Anspruch 2 oder 3, **dadurch gekennzeichnet, dass** die Dichtung (8, 18) aus einem Silikon besteht oder die Dichtung (8, 18) aus einem PUR-Schaum besteht.

5. Luftfilter nach Anspruch 4, **dadurch gekennzeichnet, dass** die Dichtung (8, 18) aus einem thixothropierten PUR-Schaum oder aus einem thermoplastischen Elastomer (TPE) besteht.

6. Luftfilter nach einem der Ansprüche 4 oder 5, **dadurch gekennzeichnet, dass** die Dichtung (8, 18) Bereiche (18', 18") aus Schaum unterschiedlicher Shorehärten, vorzugsweise einem Zweikomponenten-PUR-Schaum besteht.

## Claims

1. Air filter, for internal combustion engines in motor vehicles and motor vehicle interiors, a filter insert (1) of which comprises a bellows (2) made of fanfold material such as paper, non-woven fabric or the like, and the bellows (2) forms a plurality of adjacent bags (5), first pleats (3) being formed at the top of the bags (5) between the bags (5) of the pleated filter material, and with a sealing (8, 18) at the bellows (2), **characterized in that** the pleated filter material features an additional pleat running at right angle to a longitudinal direction (L) of the bellows (2) and/or the bags (5) and second pleats (4) running substantially at right angle to this longitudinal direction, and a front or rear end side (6, 7) of the bellows (2) being formed by a cut defining the length of the bellows (2), the exterior pleats (4*) being disposed at the longitudinal sides (9) feature outwards disposed sections (11) at the level of the sealing (8) which project into the sealing material of the sealing (8).

2. Air filter according to claim 1, **characterized in that** the sealing (8, 18) at the front sides (6, 7) and at longitudinal sides (9) of the bellows (2) consists of different material.

3. Air filter according to claim 1, **characterized in that** the sealing (8, 18) at all sides (6, 7, 9) of the bellows (2) consists of the same material.

4. Air filter according to claim 2 or 3, **characterized in that** the sealing (8, 18) consists of silicone or that the sealing (8, 18) consists of PUR-foam.

5. Air filter according to claim 4, **characterized in that** the sealing (8, 18) consists of thixotrophic PUR foam or of a thermoplastic elastomer (TPE).

6. Air filter according to one of the claims 4 or 5, **characterized in that** the sealing (8, 18) features sections (18', 18") which consist of foam of different Shore hardnesses, preferably of a two-component PUR foam.

## Revendications

1. Filtre à air pour moteurs à combustion interne dans des véhicules automobiles et dans des habitacles de véhicule automobiles, dans lequel un insert de filtre (1) comprend un soufflet (2) réalisé dans un matériau (papier, non tissé ou autre matériau comparable) plié en accordéon et le soufflet (2) forme un grand nombre de poches (5) adjacentes, des premiers plis (3) étant formés, entre les poches (5) du matériau filtrant plié, au sommet des poches (5), et doté d'un joint d'étanchéité (8, 18) sur le soufflet (2), **caractérisé en ce que** le matériau filtrant plié présente un pli supplémentaire évoluant en travers du sens longitudinal (L) du soufflet (2) ou des poches (5) et que des deuxièmes plis (4) sont formés essentiellement en travers de ce sens longitudinal (L) et une face frontale avant ou arrière (6, 7) du soufflet (2) évoluant en travers du sens longitudinal des poches (5) étant formée par une coupe définissant la longueur du soufflet (2), les plis extérieurs (4*) situés sur les côtés longitudinaux (9) présentant à hauteur du joint d'étanchéité (8) des sections (11 ) en saillie vers l'extérieur qui pénètrent dans le matériau d'étanchéité du joint d'étanchéité (8).

2. Filtre à air selon la revendication 1, **caractérisé en ce que** le joint d'étanchéité (8, 18) monté sur les faces frontales (6, 7) et sur les faces longitudinales (9) du soufflet (2) est constitué de matériaux différents.

3. Filtre à air selon la revendication 1, **caractérisé en ce que** le joint d'étanchéité (8, 18) monté sur toutes les faces (6, 7, 9) du soufflet (2) est constitué du même matériau.

4. Filtre à air selon la revendication 2 ou 3, **caractérisé en ce que** le joint d'étanchéité (8, 18) est constitué d'un silicone ou que le joint d'étanchéité (8, 18) est constitué d'une mousse PUR.

5. Filtre à air selon la revendication 4, **caractérisé en ce que** le joint d'étanchéité (8, 18) est constitué d'une mousse PUR thixotropée ou d'un élastomère thermoplastique (TPE).

6. Filtre à air selon l'une des revendications 4 ou 5, **caractérisé en ce que** le joint d'étanchéité (8, 18) présente des zones (18', 18") constituées de mousses de différentes duretés shore, de préférence une mousse PUR bi-composants.
